# EUROPÄISCHE PATENTSCHRIFT

(11) **EP 0 614 344 B1**
(45) Veröffentlichungstag und Bekanntmachung des Hinweises auf die Patenterteilung: **20.03.1996**
(21) Anmeldenummer: 92922561.3
(22) Anmeldetag: 09.11.1992
(51) Int. Cl.: A61C 13/00, A61C 5/10

(54) **VERFAHREN ZUR HERSTELLUNG VON ZAHNERSATZTEILEN**
PROCESS FOR MANUFACTURING TOOTH PROSTHESES
PROCEDE DE FABRICATION DE PROTHESES DENTAIRES

(30) Priorität: 26.11.1991 DE 4138803; 21.03.1992 DE 4209289
(43) Veröffentlichungstag der Anmeldung: 14.09.1994
(73) Patentinhaber: Krupp Medizintechnik GmbH, D-45021 Essen (DE)
(72) Erfinder: RUDOLF, Roland, D-4300 Essen 1 (DE); POLLOCK, Benedikt, D-4712 Werne (DE); KÜHN, Walter, Horst, D-7213 Dunningen (DE)
(74) Vertreter: Vomberg, Friedhelm, Dipl.-Phys.
(86) Internationale Anmeldenummer: DE9200930
(87) Internationale Veröffentlichungsnummer: WO9310720

(56) Entgegenhaltungen:
- EP-A- 0 225 513
- EP-A- 0 312 699
- WO-A-91/06256

## Beschreibung

Die Erfindung betrifft ein Verfahren zur Herstellung von Zahnersatzteilen, wie Kronen, Brücken, Inlays oder Onlays, nach dem Oberbegriff des Anspruches 1.

Ein solches Verfahren ist aus der WO-A-91/06256 bekannt.

Die Herstellung einer Metallhülsenkrone aus Vollmaterial mit Hilfe der Funkenerosion wird in der Deutschen Zahnärztlichen Zeitschrift 41, Seiten 525 und 526 (1986), beschrieben. Hierbei wird eine individuell auf einem Modell oder im Mund des Patienten modellierte Wachsform oberhalb und unterhalb eines in einer Ebene angenommenen Kronenäquators auf galvanischem Weg mit einer etwa 1 mm starken Kupferschicht beschichtet. Diese Galvanoplastik ist am Äquator trennbar, so daß man zwei Formelektroden erhält, mit denen aus einem Metallrohling funkenerosiv ein Zahnersatzteil gefertigt wird. Beide Formelektroden dringen entsprechend dem erosiven Abtrag in den Metallvollkörper ein, bis dieser von beiden Seiten zu einer Mantelkrone geformt ist. Als Vorteil dieses Verfahrens wird angegeben, daß herkömmliche Edelmetall- und Nichtedelmetall-Legierungen verarbeitet werden können, insbesondere auch solche, die sich nicht bzw. nur unter schwierigen Bedingungen vergießen lassen. Bei der Zahnersatzteilherstellung werden Fehler, die von Form-, Dimensions- und Gefügeveränderungen während des Gusses herrühen, weitgehend ausgeschlossen. Nachteilig bei diesem Verfahren ist jedoch, daß der natürliche Zahn bzw. entsprechend geformte Wachsmodelle keine eindeutig definierbare Äquatorebene besitzen, da der Zahnäquator sowohl in vertikaler wie auch in horizontaler Richtung wellenförmig verläuft. Nimmt man eine mittlere Schnittebene an, so werden gleichzeitig Hinterschnitte in Kauf genommen, die mittels Funkenerosion nicht bearbeitbar sind.

Dieselben Schwierigkeiten ergeben sich auch, wenn man das in der DE 37 35 558 C2 beschriebene Verfahren verwendet, bei dem mehrere positive Wachsmodelle auf einem Träger angeordnet und mit einer Ausformmasse die Zwischenräume zwischen den Trägern bis zu einer für alle Wachsmodelle gemeinsamen Äquatorebene aufgefüllt werden, bevor zunächst eine Silberschicht und danach galvanisch Kupfer aufgetragen werden. Zudem ist die Ausrichtung der einzelnen Wachsmodelle äußerst zeitraubend.

Wie in der DE 39 35 275 C1 oder WO 91/06256 erwähnt, haben die zuvor beschriebenen Verfahren weiterhin den Nachteil, daß die Wachsmodelle sowohl beim Abziehen vom Gipsmodell als auch bei der Vorbereitung bzw. Herstellung der Kupferelektroden ungeschützt sind und die Gefahr einer Verformung in Kauf genommen werden muß. Zur Beseitigung dieses Nachteiles wird folgende Verfahrenstechnik vorgeschlagen. Auf den entfetteten, imprägnierten Stumpf eines positiven Gipsmodelles wird eine gleitfähige, stabile, möglichst inelastische, dünnwandige Kunststoffhaube aufgetragen, die von der okklusalen Seite aus gesehen kurz vor der Präparationsgrenze endet. Hierüber wird anschließend das Wachsmodell unter Ausformung einer Präparationsgrenze und gleichzeitiger Festlegung eines Zahnäquators geformt. Anschließend wird hierauf eine bis zum Zahnäquator reichende Silikonschicht okklusal aufgetragen, während dessen das Gipsmodell als Meistermodell mit eingesetztem Wachsteil in eine Justiervorrichtung eingespannt ist. Auf die Silikonschicht wird hiernach ein aushärtbarer Kunststoff aufgetragen, auf den eine horizontal ausgerichtete im Umfang größere Orientierungsplatte abgesenkt wird. Die Orientierungsplatte, die nach Aushärtung des Kunststoffes hiermit verbunden ist, wird mit dem Kunststoff, der Silikonschicht, dem Wachsmodell und der Kunststoffhaube von dem Gipsstumpf abgehoben und von der apikalen Seite her von dem Zahnäquator aus werden der zuletzt aufgetragene Kunststoff sowie die hieran angrenzende Fläche der Orientierungsplatte verspachtelt. Auf die apikale Seite der ersten Kunststoffhaube, der freiliegenden Wachsmodellflächen und der angrenzenden Bereiche bis zur Orientierungsplatte wird zunächst ein elektrisch leitfähiges Material und hierauf galvanisch ein Kupferüberzug aufgetragen, der dann zusammen mit dem Wachsmodell herausgelöst wird. Von der okklusalen Seite her kann anschließend bis zum Zahnäquator ebenfalls zunächst ein leitfähiges Mittel und darauf galvanisch ein Kupferüberzug aufgetragen werden. Auf beiden Seiten des Kupferüberzuges an den Außenflächen werden Befestigungsmittel angebracht, die zueinander in axialer und radialer Richtung ausgerichtet sind und die nach Trennung der Kupferüberzüge als Einspannmittel in eine Funkenerosionsanlage dienen. Die Kupferüberzüge selbst dienen als Funkenerosionselektroden zur Ausformung eines dem Wachsmodell entsprechenden Zahnersatzteiles aus einem Erodiergut. Ggf. wird zunächst eine 2 bis 3/10 mm dicke Kupferschicht galvanisch aufgetragen, diese Schicht an ihrer Oberfläche passiviert, eine erneute Schicht aus leitfähigem Material aufgetragen und der Galvanisierungsauftrag zur Herstellung von Schruppelektroden fortgesetzt.

Es ist Aufgabe der vorliegenden Erfindung unter Verwendung des nach dem vorbeschriebenen Verfahren hergestellten Metallüberzuges weitere Verbesserungen der erosiven Bearbeitung anzugeben.

Diese Aufgabe wird bei dem eingangs benannten Verfahren dadurch gelöst, daß der Metallüberzug als Formwerkzeug zum Ultraschallerodieren eines unbearbeiteten Blockmaterials aus Keramik verwendet wird bzw. daß die weitere Metallschicht als Formwerkzeug zum Ultraschallerodieren eines Graphitvollkörpers und zur Ausformung einer Graphitelektrode für die Funkenerosion des metallischen Zahnersatzteiles verwendet wird. Grundsätzlich können mit diesem Verfahren auch andere metallische Teile hergestellt werden, wie z.B. Schmuckstücke oder ähnliches.

Die Ultraschallbearbeitung beruht auf folgendem Prinzip: Wird ein zäher Körper gegen ein sprödhartes Material unter Zusatz von Schleifmittelschlamm in Vibration versetzt, so wird das sprödere Material stärker angegriffen als das zähe Material, das durch Eindringen der Schleifmittelkörner in seine plastisch verformte Oberfläche eine Panzerung erfährt. Der im Ultraschallbereich schwingende Körper dient hierbei als Vibrationsschleifer, der ein Einsenken mit der Formwerkzeugkontur in das Werkstück ermöglicht. Das verwendete Schleifmittel ist hierbei möglichst sehr viel härter als das zu bearbeitende Vollmaterial (Werkstück).

In der WO 91/03211 ist zwar bereits ein Verfahren zur Herstellung von Zahnersatzteilen unter Verwendung von Ultraschall beschrieben worden, jedoch wird als Sonotrode zur Fertigung des Zahnersatzteiles ein Körper aus einem mineralischen Stoff, wie Gips oder Zement, oder aus einem thermoplastischen bzw. härtbarem oder gefülltem Kunststoff vorgeschlagen. Alle genannten Stoffe sind jedoch für eine Ultraschallerosion nicht hinreichend formbeständig. Soweit in der genannten Druckschrift zusätzlich vorgeschlagen wird, auf das abgeformte Negativ aus Gips, Zement oder gehärtetem Kunststoff eine Oberflächenschicht aufzugalvanisieren, aufzuspritzen oder aufzudampfen, wird hierdurch je nach Dicke des aufgetragenen Materials die Paßgenauigkeit erheblich verfälscht. Zudem ist der Gips, der Zement oder der Kunststoff als Basiswerkstoff für den Metallüberzug nicht formbeständig genug, um als Sonotrodenstützmaterial dienen zu können. Entsprechendes gilt hinsichtlich des in der US-A-3 971 133 beschriebenen Verfahrens, worauf in der vorgenannten Druckschrift eingegangen wird.

Erst die vorliegende Erfindung gestattet es, hinreichend formbeständige Formwerkzeuge für die Ultraschallerosion bereitzustellen, die auf den eigentlichen Sonotroden-Schwingkörper aufgelötet oder sonstwie befestigt sein können.

Alternativ hierzu ist es jedoch ebenfalls möglich, aus einer galvanoplastisch hergestellten Negativform des zuvor beschriebenen Metallüberzuges eine Graphitelektrode durch Ultraschallerosion herzustellen. Hierzu wird auf den beschriebenen Metallüberzug ein leitfähiges Trennmittel aufgetragen und hierauf anschließend eine Metallschicht aufgalvanisiert, die später das Formwerkzeug bildet. Die Graphitelektrode kann zur Funkenerosion von Vollmaterial verwendet werden. Bei der Fertigung von Zahnersatzteilen wird dann der Funkenerosionsabtrag vorzugsweise in mindestens zwei Schritten durchgeführt, nämlich einer vorhergehenden Grobabtragung (Schrupp-Behandlung) und einer anschließenden Feinbearbeitung. Die Schrupp-Behandlung wird durch eine oder mehrere Graphitelektroden vorgenommen, die hierbei den bei der Funkenerosion üblichen Abtrag erhalten. Die aus dem genannten Verfahren erhältlichen Metallüberzüge, z.B. aus Kupfer, werden nunmehr zur Feinbearbeitung des gefertigten Zwischenproduktes benutzt, so daß sich die Maßgenauigkeit des hergestellten Zahnersatzteiles gewährleistet ist. Es können ggf. jedoch auch die Graphitelektroden für die Grob- und die Feinbearbeitung oder zur Herstellung beliebiger Kleinserienteile verwendet werden.

Zur Herstellung der Metallüberzüge bzw. der Metallschicht wird im übrigen auf die DE 39 35 275 C1 Bezug genommen, vorzugsweise besteht bzw. bestehen der Metallüberzug und/oder die Metallschicht aus Kupfer oder Nickel.

Vorzugsweise wird das Ultraschallerodieren durch axiale Schwingbewegung des Formwerkzeuges mit einer Frequenz zwischen 20 bis 25 kHz durchgeführt. Das Formwerkzeug stößt hierbei senkrecht auf das zu bearbeitende Werkstück.

Als Schleifmittel werden vorzugsweise Diamant-, Siliciumcarbid- oder Borcarbid- oder Bornitrid-Körner, vorzugsweise mit einer Korngröße zwischen 1 µm bis 100 µm, weiterhin vorzugsweise zwischen 1 bis 10 µm zusammen mit einer Kühlflüssigkeit, vorzugsweise Wasser verwendet. Das Schleifmittel wird schlammförmig von der Seite her an den Erodierort geführt.

Das mittels Ultraschall zu erodierende Blockmaterial besteht entweder aus Keramik oder - bei der Herstellung einer Graphitelektrode - aus Graphit oder aus einer Graphitlegierung. Als Material für das Formwerkzeug wird vorzugsweise Kupfer oder Nickel verwendet.

Nach einer weiteren Ausgestaltung der Erfindung wird zunächst das mit einem Ultraschall-Formwerkzeughalter an dessen Stirnseite form- und kraftschlüssig befestigte erste Formwerkzeug auf den zu bearbeitenden Vollkörper gefahren und dieser erodiert und anschließend das von dem Ultraschall-Formwerkzeughalter abgetrennte Formwerkzeug als Auflagekörper während der Erosion der gegenüberliegenden noch unbearbeiteten Werkstückseite dient. Diese Verfahrenstechnik erspart die Notwendigkeit, eine Halterung bei der rückseitigen Werkstückbearbeitung bereitzustellen.

Vorzugsweise wird der unbearbeitete Vollkörper und/oder das an dem Auflagekörper anliegende, auf nur einer Hälfte bearbeitete Werkstück unter Luftdruck, vorzugsweise bis zu 4 bar auf eine ebene Grundfläche während der erosiven Bearbeitung gepreßt. Durch den Luftdruck ist es möglich, daß mit einer Ultraschallfrequenz schwingende Werkzeug horizontal bei der erosiven Abtragung vorzutreiben, während der Vollkörper, das zu bearbeitende Werkstück, flach an eine senkrecht stehende Fläche gepreßt wird. Die Zuführung des Schleifmittels bzw. des Schleifmittelschlammes geschieht dann im wesentlichen von oben aus. Voraussetzung für diese Verfahrensweise ist lediglich, daß die jeweilige Auflagefläche des Werkstückes an der Wand zumindest weitgehend eben ist. Daneben ist es ebenso möglich, das Werkstück auf eine horizontale Fläche aufzulegen und durch senkrechte Bewegung des Ultraschallwerkzeuges zu bearbeiten.

Ausführungsbeispiele, an denen die Erfindung weiterhin erläutert werden soll, sind in den Zeichnungen dargestellt. Es zeigen
- Fig. 1: einen Querschnitt durch einen Gipsstumpf mit angeformtem Wachsmodell, worauf verschiedene Überzüge aufgetragen worden sind, in schematischer Darstellung,
- Fig. 2: einen Querschnitt durch ein Wachsmodell mit einem galvanisch hergestellten Kupferformwerkzeug an der apikalen Seite,
- Fig. 3: einen Querschnitt durch aufeinandergesetzte Kupferformwerkzeuge mit dazwischenliegendem Wachsmodell,
- Fig. 4: eine schematische Darstellung einer Vorrichtung zum Einspannen, Einlegen und Ausrichten von Gipsmodellen und
- Fig. 5a bis f: eine schematische Darstellung der Herstellung einer Keramikkrone durch Formwerkzeuge mittels Ultraschallerodieren,
- Fig. 6a und b: jeweils in schematischer Darstellung die galvanisch abgeformte Metallschicht als Formwerkzeug für die herzustellende Graphitelektrode.

Das erfindungsgemäße Verfahren vereint drei verschiedene Technologien, nämlich
1. die zahntechnische Bearbeitung, Herstellung eines Wachsmodelles,
2. Herstellung einer Galvanoplastik und
3. ultraschallerosiven Abtrag aus einem Rohling.

Bei der Herstellung von Zahnersatzteilen wird von einem Abdrucklöffel ausgegangen, aus dem ein positives Gipsmodell hergestellt wird. Nach diesem Gipsmodell werden die Gipsstümpfe erstellt - entweder für Kronen oder für Brücken -, jeweils mit entsprechend festgelegten Präparationsgrenzen.

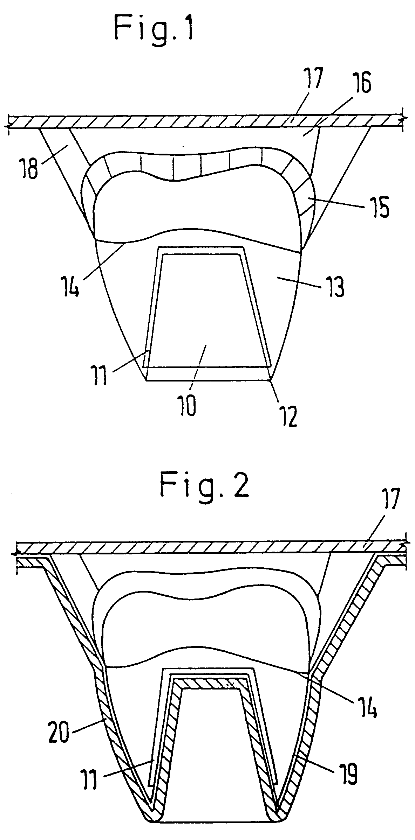

Der in Fig. 1 dargestellte Gipsstumpf 10 wird gereinigt und imprägniert. Nach dem Eintrocknen des Imprägniermittels wird eine Kunststoffhaube 11 aus Kaltpolymerisat auf Acrylatbasis aufgetragen, die etwa 1/10 mm oberhalb der Präparationsgrenze 12 endet. Diese Kunststoffhaube hat eine Dicke von 0,5 bis etwa 1 mm. Anschließend wird auf diesem Acrylhäubchen 11 ein Wachsmodell 13 geformt, wobei auf optimale Darstellung der Präparationsgrenze 12 und des Zahnäquators 14 geachtet wird. Der Gipsstumpf 10 mit der modellierten Wachskrone 13 wird anschließend in das Meistermodell eingesetzt und in einen Modelltisch verschraubt. Alle wichtigen Punkte werden nun mit dem Parallelometer überprüft. Hiernach wird auf das Wachsmodell eine dünne Silikonauflage 15 oberhalb des Zahnäquators aufgetragen, welche zum Schutz der Wachskrone 13 dient. Oberhalb der Silikonauflage 15 wird ein aushärtbarer Kunststoff 16 aufgetragen, auf den vor der Aushärtung dieses Kunststoffes eine Orientierungsplatte 17 aus Metall abgesenkt werden kann, die nach Aushärtung mit dem Kunststoff fest verbunden ist. Anschließend wird die Orientierungsplatte 17 mit samt der anhaftenden Schichten 16, 15, 13 und 11 von dem Gipsstumpf 10 abgehoben und von der apikalen Seite her von dem Zahnäquator 14 aus der zuletzt aufgetragene Kunststoff sowie die hieran angrenzenden Flächen der Orientierungsplatte 17 verspachtelt. Die Spachtelmasse ist mit 18 bezeichnet.

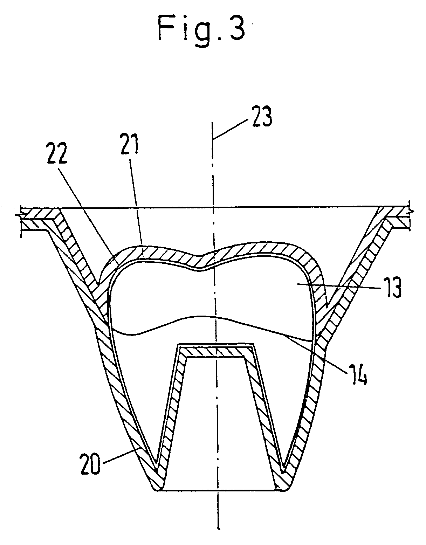

Wie aus Fig. 2 ersichtlich werden anschließend von der apikalen Seite her die Unterseite der Orientierungsplatte 17, die Spachtelmasse 18, die freigelegte Wachsoberfläche 13 unterhalb des Äquators 14 sowie die Innenseite des Häubchens 11 mit der Silberschicht 19 überzogen, die als Basis für den Kupferüberzug 20 dient. Hierzu wird die Orientierungsplatte gegebenenfalls zusammen mit weiteren Orientierungsplatten anderer Modelle in eine Einbettmasse gelegt oder sonstwie an einem Träger befestigt und in ein galvanisches Bad gegeben. Der galvanische Kupferüberzug sollte etwa die Stärke von 1 mm haben. Anschließend wird die Orientierungsplatte mit samt der Schichten 16, 15, 18 abgehoben, so daß man den hergestellten Kupferüberzug 20 mit noch einliegendem Wachsmodell 13 erhält, welches von der okklusalen Seite her zugänglich ist. Auf dieses Wachsmodell 13 und die angrenzenden Randbereiche des hergestellten Kupferüberzuges wird nun abermals eine Silber- oder Graphitschicht 21 aufgetragen, die als Basis einer Kupferschicht 22 dient, welche ebenfalls in einem galvanischen Bad hergestellt ist. Hierzu befindet sich der gesamte in Fig. 3 dargestellte Körper in einem galvanischen Bad. Nach Auftrag einer hinreichend dicken Kupferschicht 20 bzw. 21 wird der Körper dem galvanischen Bad entnommen und das Wachsmodell herausgenommen, da es jetzt nicht mehr benötigt wird. Die Innenseiten der Kupferüberzüge 21 und 20 entsprechen der Negativkontur des Wachsmodelles 13. Um die Kupferteile 20, 21 als Formwerkzeug benutzen zu können, werden diese an die Stirnseite eines Ultraschallschwingkörpers durch Löten oder ähnliches angebracht. Wichtig ist hierbei, daß das Formwerkzeug axial wie radial exakt ausgerichtet wird, um bei der Formgebung des herzustellenden Werkstückes eine klar definierte Orientierung zu haben.

Selbstverständlich können stirnseitig eines Schwingkörpers auch mehrere Formwerkzeuge nebeneinander angeordnet werden, womit dann entsprechend der Anzahl der Formwerkzeuge eine Mehrfachbearbeitung von Werkstücken möglich ist.

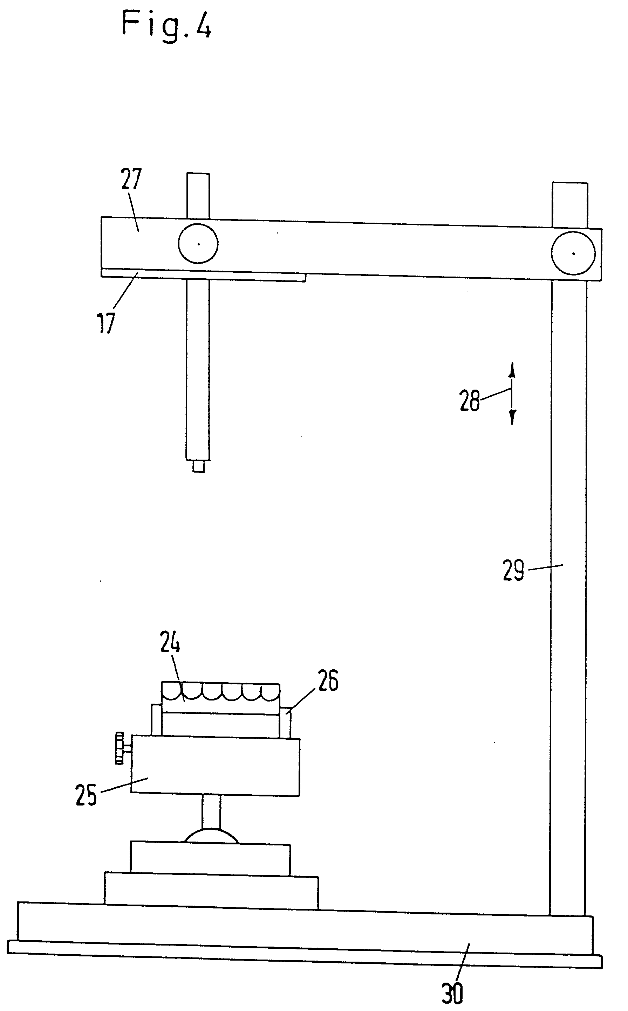

Eine Vorrichtung zum Einspannen eines Meistermodelles 24 und dessen Ausrichtung ist Fig. 4 zu entnehmen. Diese Vorrichtung besteht im wesentlichen aus einem Ablagetisch 25, der in die gewünschten Raumrichtungen schwenkbar ist und der beispielsweise Klemmbacken 26 zum Einspannen des Gipsmodelles 24 aufweist. Oberhalb dieses Tisches ist ein Auslegerarm 27 angeordnet, der in Richtung des Doppelpfeiles 28 auf- und abbewegbar ist. Dieser Auslegerarm 27 besitzt ebenso wie der Tisch 25 eine nicht dargestellte Bohrung in vertikaler Richtung, über die der Auslegerarm und der Tisch in axialer Richtung mittels eines Zentrierstiftes ausgerichtet werden können. Darüber hinaus ist die Unterseite des Auslegerarms 27 magnetisch oder mit mechanischen Hilfsmitteln versehen und daher geeignet, eine Orientierungsplatte 17 zu halten. Der Auslegerarm ist entweder fest an einer um ihre vertikale Achse drehbaren Vertikalsäule 29 befestigt oder um diese Vertikalachse 29 drehbar. Der Auflagetisch 25 kann entweder fest mit der Grundfläche 30 verbunden sein oder hierauf lose aufliegen.

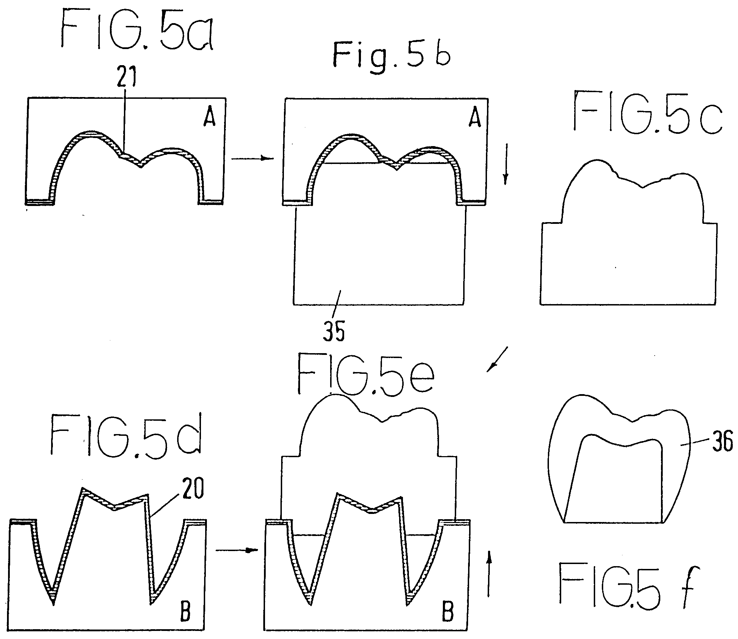

Ultraschallbohrer sind im Prinzip nach dem Stand der Technik bekannt, wurden jedoch bisher nur zum Bohren verwendet. Hierzu wird ein Körper benötigt, der mit stirnseitig befestigtem Formwerkzeug Schwingungen in längsaxialer Richtung mit einer Frequenz zwischen 20 und 25 kHz durchführen kann. Wie im einzelnen aus Fig. 5a bis f ersichtlich, werden die Formwerkzeuge A und B zur Herstellung einer Krone verwendet. Hierzu wird das Formwerkzeug A auf einen Vollkörper, z.B. aus Keramik, abgesenkt, wobei gleichzeitig in längsaxialer Bewegungsrichtung das Formwerkzeug A in Schwingung gehalten wird. Gleichzeitig wird zu den Auftreffpunkten des Formwerkzeuges A und der bearbeiteten Oberfläche des Körpers 35 ein Schleifmittelschlamm zugeführt. Das Formwerkzeug A wird soweit vorgetrieben, bis die durch den Äquator festgelegte Grenze erreicht ist. Anschließend wird das Formwerkzeug A von dem Schwingkörper getrennt und durch Formwerkzeug B ersetzt.

Das Formwerkzeug A kann nunmehr als Auflagefläche für die bearbeitete Seite des Körpers 35 dienen. Das Formwerkzeug B wird nunmehr von der anderen Seite des Körpers 35 (auf der unbearbeiteten Seite) herangeführt und so lange vorgetrieben, bis die Äquatorlinie erreicht ist. Die fertige Krone 36 (Metallhülsenkrone) kann entnommen werden.

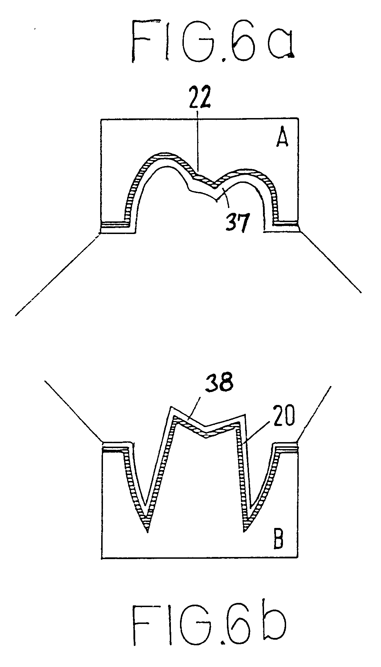

Die Formwerkzeuge A (Okklusalteil) und B (Stumpfteil) gemäß Fig. 5a und d können jedoch in der nach dem Stand der Technik bekannten Weise als Funkenerosionselektroden mit der Maßgabe verwendet werden, daß die Kupferelektroden zur Feinbearbeitung eines bereits aus dem Vollmaterial durch Schruppen hergestellten Gegenstandes dienen. Um eine geeignete Schruppelektrode kostengünstig herzustellen, wird, wie aus Fig. 6a und b ersichtlich, auf galvanischem Wege aus den Kupferelektroden A und B eine Negativform erstellt. Hierzu werden die Kupferüberzüge 20 bzw. 22 zunächst mit einem leitfähigen Material, z.B. Silber, bestrichen und anschließend eine Kupferschicht 37 bzw. 38 galvanisch aufgetragen. Diese Kupferschicht 37 und 38 dient als Formwerkzeug zum Ultraschallerodieren einer Graphitelektrode, die dann wieder die Form der Formwerkzeuge A und B hat. Diese Graphit-Formwerkzeuge dienen zum Schruppen eines Vollmaterialkörpers, der abschließend, wenn nötig, durch die Kupferelektroden feinbearbeitet wird.

## Patentansprüche

1. Verfahren zur Herstellung von Zahnersatzteilen, wie Kronen, Brücken, Inlays oder Onlays mit folgenden Verfahrensschritten:
Auf den entfetteten, imprägnierten Stumpf (10) eines positiven Gipsmodelles wird eine gleichmäßige, stabile, möglichst inelastische, dünnwandige Kunststoffhaube (11) aufgetragen, die von der okklusalen Seite aus gesehen kurz vor der Präparationsgrenze (12) endet und über der anschließend die Wachsmodellation (13) unter Ausformung einer Präparationsgrenze (12) und gleichzeitiger Festlegung des Zahnäquators (14) geformt wird, dann hierauf eine bis zum Zahnäquator (14) reichende Silikonschicht (15) okklusal aufgetragen wird, währenddessen das Gipsmodell als Meistermodell mit eingesetztem Wachsteil in eine Justiervorrichtung eingespannt ist, daß ferner auf die Silikonschicht (15) ein aushärtbarer Kunststoff (16) aufgetragen wird, auf den eine horizontal ausgerichtete im Umfang größere Orientierungsplatte (17) abgesenkt wird, so daß diese Orientierungsplatte (17) nach Aushärtung des Kunststoffes (16) mit dem Kunststoff (16) verbunden ist, daß diese Orientierungsplatte (17) mit samt dem anhaftenden Kunststoff (16), der Silikonschicht (15), dem Wachsmodell (13) und der Kunststoffhaube (11) von dem Gipsstumpf (10) abgehoben wird und von der apikalen Seite her von dem Zahnäquator (14) aus der zuletzt aufgetragene Kunststoff (16) sowie die hieran angrenzende Fläche der Orientierungsplatte (17) verspachtelt werden und auf die apikale Seite der (ersten) Kunststoffhaube, der freiliegenden Wachsmodellfläche und angrenzenden Bereiche bis zur Orientierungsplatte (17) das elektrisch leitfähige Material (19) und darauf auf galvanischem Wege ein Metallüberzug (20) aufgetragen werden, daß der Metallauftrag (20) zusammen mit dem Wachsmodell (13) herausgelöst und von der okklusalen Seite her bis zum Zahnäquator (14) ebenfalls zunächst ein leitfähiges Mittel (21) und darauf auf galvanischem Weg ein Metallüberzug (22) aufgetragen werden und daß auf beiden Seiten des Metallüberzuges (20, 22) an den Außenflächen jeweils ein Befestigungsmittel angebracht wird, wobei diese zueinander in axialer und radialer Richtung ausgerichtet sind und schließlich die Metallüberzüge (20, 22) voneinander und vom Wachsmodell getrennt und als jeweilige Erosionselektrode zur Ausformung eines dem Wachsmodell entsprechenden Zahnersatzteiles aus einem Erodiergut dienen, oder der Metallüberzug mit einem leitfähigen Trennmittel überzogen und hierauf anschließend eine Metallschicht (37, 38) aufgalvanisiert wird,
**dadurch gekennzeichnet**,
daß der Metallüberzug (20, 22) als Formwerkzeug (A, B) zum Ultraschallerodieren eines unbearbeiteten Blockmaterials aus Keramik (35) verwendet wird bzw. daß die weitere Metallschicht (37, 38) als Formwerkzeug zum Ultraschallerodieren eines Graphitvollkörpers und zur Ausformung einer Graphitelektrode (A, B) für die funkenerosive Herstellung des metallischen Zahnersatzteiles (36) verwendet wird.

2. Verfahren nach Anspruch 1, dadurch gekennzeichnet, daß der Metallüberzug (20, 22; 37, 38) und/oder die Metallschicht aus Kupfer oder Nickel besteht/bestehen.

3. Verfahren nach Anspruch 1 oder 2, dadurch gekennzeichnet, daß das Ultraschallerodieren durch axiale Schwingbewegung des Formwerkzeuges (A, B) mit einer Frequenz zwischen 20 bis 25 kHz durchgeführt wird.

4. Verfahren nach einem der Ansprüche 1 bis 3, dadurch gekennzeichnet, daß als Schleifmittel Diamant-, Siliciumcarbid-, Borcarbid- oder Bornitrid-Körner, vorzugsweise einer Korngröße zwischen 1 µm bis 100 µm, weiterhin vorzugsweise zwischen 1 bis 10 µm, zusammen mit einer Kühlflüssigkeit, vorzugsweise Wasser zugeführt werden.

5. Verfahren nach einem der Ansprüche 1 bis 4, dadurch gekennzeichnet, daß zunächst das mit einem Ultraschallformwerkzeughalter an dessen Stirnseite form- und kraftschlüssig befestigte erste Formwerkzeug (A) auf den zu bearbeitenden Vollkörper (35) gefahren und dieser erodiert wird und daß anschließend das von dem Ultraschallformwerkzeughalter abgetrennte Formwerkzeug (A) als Auflagekörper während der Erosion der gegenüberliegenden noch unbearbeiteten Werkstückseite dient.

6. Verfahren nach einem der Ansprüche 1 bis 5, dadurch gekennzeichnet, daß der unbearbeitete Vollkörper (35) und/oder das an dem Auflagekörper anliegende, nur auf einer Hälfte bearbeitete Werkstück (35) unter Luftdruck, vorzugsweise bis zu 4 bar, auf eine ebene Grundfläche während der erosiven Bearbeitung gepreßt wird.

## Claims

1. A method for manufacturing tooth prostheses such as crowns, bridges, inlays, or onlays, according to the following method steps:
On a degreased impregnated stump (10) of a positive plaster model a thin-walled, slippery, stable, and relatively inelastic synthetic-resin cap (11) is mounted which stops on the occlusal side shortly before the preparation border (12) and over which is subsequently formed the wax model (13) by shaping a preparation border (12) and simultaneous establishment of the tooth equator (14), then a silicone layer (15) extending to the tooth equator is mounted occlusally on it, while meanwhile the plaster model is set as a master model with the inset wax parts in an adjustment device, that in addition on the silicone layer (15) a hardenable plastic (16) is layered on which a horizontally extending and overreaching orientation plate (17) is set so that this orientation plate (17) is fixed after hardening of the plastic (16) with the plastic (16), that this orientation plate (17) together with the affixed plastic (16), the silicone layer (15), the wax model (13), and the plastic cap (11) is lifted from the plaster stump and a filler is applied from the apical side from the tooth equator (14) to the last applied plastic (16) as well as to the adjacent surfaces of the orientation plate (17) and the apical sides of the (first) plaster cup, the exposed wax-model surfaces and adjacent areas right up to the orientation plate (17) are the coated with an electrically conductive material (19) and thereover by way of galvanic with a metal layer (20), that the metal layer (20) together with the wax model (13) are separated and from the occlusal side right up to the tooth equator (14) first a conductive material (21) and then by way of galvanic a metal layer (22) is applied and on both sides of the metal layer (20, 22) on the external surfaces of each connecting means are mounted, which are arranged axially and radially in line with each other and finally the metal layers (20, 22) are separated form each other and from the wax model (13) and are used as the respective erosion electrodes for making a tooth replacement part corresponding to the wax model (13) from an erodible material, or the metal layer is applied with an conductive separating material and onto this subsequently a metal layer (37, 38) is galvanically applied,
characterised in that
the metal layer (22, 22) is used as a die (A, B) for ultrasonic erosion of an unmachined solid block of ceramic (35) respectively that the further metal layer (37, 38) is used as a die for ultrasonic erosion of a solid graphite body and for forming a graphite electrode (A, B) for spark-discharge production of a metallic tooth replacement part (36).

2. The method according to claim 1, characterised in that the metal coating (20, 22; 37, 38) and/or the metal layer is/are formed of copper or nickel.

3. The method according to claim 1 or 2, characterised in that the ultrasonic erosion is carried out by axial oscillation of the die (A, B) at a frequency between 20 and 25 kHz.

4. The method according to one of claims 1 to 3, characterised in that the grinding agent is diamond, silicon-carbide, boron carbide, or boron-nitride particles preferably with a particle size between 1 µm and 100 µm, more preferably between 1 and 10 µm, together with a coolant liquid, preferably water.

5. The method according to one of claims 1 to 4, characterised in that first the first die (A) fixed solidly on the end of a ultrasound die holder is advanced into the solid body (35) to be worked to erode it and then the die (A) is separated from the ultrasound die holder and is used as a support during the erosion of the opposite still unmachined side of the workpiece.

6. The method according to one of claims 1 to 5, characterised in that the unmachined solid body (35) and/or the workpiece (35) lying in the support with only one half machined is pressed by air pressure, preferably at up to 4 bar on a planar surface during the erosive machining.

## Revendications

1. Procédé de fabrication de prothèses dentaires telles que couronnes dentaires, bridges, inlays ou onlays, comprenant les étapes de procédé suivantes:
Sur le tronc (10) dégraissé et imprégné d'un modèle en plâtre positif est appliqué un chapeau en matière plastique (11) homogène, solide, si possible inélastique et à paroi mince, qui - vu du côté occlusal - se termine peu avant la limite de préparation (12) et sur lequel est par la suite formé le modèle en cire (13) en modelant une limite de préparation (12) et tout en déterminant l'équateur de dent (14), ensuite une couche en silicone (15) y est appliquée de manière occlusale, qui s'étend jusqu'à l'équateur de dent (14), ce faisant le modèle en plâtre est serré en tant que modèle-maître avec une pièce en cire insérée dans un dispositif d'ajustage, que l'on applique au-delà de ce fait sur la couche en silicone (15) une matière plastique (16) thermodurcissable sur laquelle est abaissée une plaquette d'orientation (17) orientée horizontalement et présentant une circonférence plus importante, de sorte que cette plaquette d'orientation (17) est reliée avec la matière plastique (16) après le durcissement de cette dernière (16), que ladite plaquette d'orientation (17) est enlevée conjointement avec la matière plastique (16) adhérente, la couche en silicone (15), le modèle en cire (13) ainsi qu'avec le chapeau en matière plastique (11) du tronc en plâtre (10) et que du côté apical, à partir de l'équateur de dent (14), la matière plastique (16) appliquée en dernier lieu ainsi que la face de la plaquette d'orientation (17), qui s'y joint, sont mastiquées et que sur le côté apical du (premier) chapeau en matière plastique, de la face dégagée du modèle en cire et des zones adjacentes jusqu'à la plaquette d'orientation (17) est appliqué le matériau conducteur (19), et sur ce dernier est appliqué de manière galvanique un revêtement métallique (20), que le revêtement métallique (20) est enlevé conjointement avec le modèle en cire (13) et un matériau conducteur (21) est d'abord également appliqué du côté occlusal jusqu'à l'équateur de dent (14), sur ledit matériau conducteur (21) étant appliqué là aussi de manière galvanique un revêtement métallique (22), et que de part et d'autre du revêtement métallique (20, 22), sur les faces extérieures, est monté respectivement un moyen de fixation, ces moyens étant orientés l'un par rapport à l'autre en sens axial et radial, et que finalement les revêtements métalliques (20, 22) servent - séparés l'un de l'autre ainsi que du modèle en cire et en tant qu'électrode d'érosion respective - à former une prothèse dentaire à partir d'un matériau d'érosion, ladite prothèse correspondant au modèle en cire, ou que le revêtement métallique est revêtu d'un agent séparateur conducteur sur lequel est par la suite appliquée de manière galvanique une couche métallique (37, 38),
**caractérisé par le fait**
que le revêtement métallique (20, 22) est utilisé en tant qu'outil de formage (A, B) pour l'érosion ultrasonore d'un matériau en bloc en céramique (35) non usiné, ou bien que la seconde couche métallique (37, 38) est utilisée en tant qu'outil de formage pour l'érosion ultrasonore d'un corps plein en graphite ainsi que pour former une électrode en graphite (A, B) pour la fabrication par électro-érosion de la prothèse dentaire métallique (36).

2. Procédé selon la revendication 1, caractérisé par le fait que le revêtement métallique (20, 22; 37, 38) et / ou la couche métallique se compose(nt) de cuivre ou de nickel.

3. Procédé selon la revendication 1 ou 2, caractérisé par le fait que l'érosion ultrasonore est effectuée par un mouvement oscillant axial de l'outil de formage (A, B) avec une fréquence qui est comprise entre 20 et 25 kHz.

4. Procédé selon l'une des revendications 1 à 3, caractérisé par le fait que l'on amène en tant qu'abrasif des grains de diamant, de carbure de silicium, de carbure de bore ou de nitrure de bore, présentant de préférence une grosseur de grain qui est comprise entre 1 µm et 100 µm, et en outre de préférence entre 1 et 10 µm, ainsi que - conjointement avec cet abrasif - un liquide de refroidissement, de préférence de l'eau.

5. Procédé selon l'une des revendications 1 à 4, caractérisé par le fait que le premier outil de formage (A), qui est fixé à engagement positif et par adhérence par le biais d'un porte-outil pour outil de formage ultrasonore sur le côté frontal de ce porte-outil, est d'abord placé sur le corps plein (35) à usiner et que celui-ci est érodé, et que l'outil de formage (A) séparé du porte-outil pour outil de formage ultrasonore sert par la suite, c'est-à-dire durant l'érosion de l'autre côté de la pièce ne pas encore usiné et se trouvant en face, en tant que corps d'appui.

6. Procédé selon l'une des revendications 1 à 5, caractérisé par le fait que le corps plein (35) non usiné et / ou la pièce (35) qui s'appuie sur le corps d'appui et dont uniquement une moitié est usinée, est pressé sous pression d'air allant de préférence jusqu'à 4 bar, durant l'usinage érosif, sur une surface de base plane.
